# EUROPEAN PATENT SPECIFICATION

(11) **EP 4 181 078 B1**
(45) Date of publication and mention of the grant of the patent: **18.03.2026**
(21) Application number: 22203704.6
(22) Date of filing: 26.10.2022
(51) Int. Cl.: G06V 10/774, G06V 10/82

(54) **DAMAGE TRANSFER METHOD WITH A REGION-BASED ADVERSARIAL LEARNING**
SCHADENSÜBERTRAGUNGSVERFAHREN MIT BEREICHSBASIERTEM GEGNERISCHEM LERNEN
PROCÉDÉ DE TRANSFERT DE DOMMAGES AVEC UN APPRENTISSAGE ANTAGONISTE BASÉ SUR UNE RÉGION

(30) Priority: 12.11.2021 US 202117525807
(43) Date of publication of application: 17.05.2023
(73) Proprietor: Hitachi, Ltd., Tokyo 100-8280 (JP)
(72) Inventor: GONZALEZ DIAZ, Maria Teresa, Santa Clara, CA 95054 (US); GHOSH, Dipanjan Dipak, Santa Clara, CA 95054 (US); ALAM, Mahbubul, Santa Clara, CA 95054 (US); GUPTA, Chetan, Santa Clara, CA 95054 (US); HASSAN, Eman T., Santa Clara, CA 95054 (US)
(74) Representative: MERH-IP Matias Erny Reichl Hoffmann Patentanwälte PartG mbB

(56) References cited:
- NIU SHUANLONG ET AL: "Defect Image Sample Generation With GAN for Improving Defect Recognition", IEEE TRANSACTIONS ON AUTOMATION SCIENCE AND ENGINEERING, IEEE SERVICE CENTER, NEW YORK, NY, US, vol. 17, no. 3, 17 February 2020 (2020-02-17), pages 1611 - 1622, XP011796937, ISSN: 1545-5955, [retrieved on 20200701], DOI: 10.1109/TASE.2020.2967415
- TAKURO HOSHI ET AL: "Railway Anomaly detection model using synthetic defect images generated by CycleGAN", ARXIV.ORG, CORNELL UNIVERSITY LIBRARY, 201 OLIN LIBRARY CORNELL UNIVERSITY ITHACA, NY 14853, 24 February 2021 (2021-02-24), XP081891991
- ZHANG XIAOGUANG ET AL: "Exploring the Tricks for Road Damage Detection with A One-Stage Detector", 2020 IEEE INTERNATIONAL CONFERENCE ON BIG DATA (BIG DATA), IEEE, 10 December 2020 (2020-12-10), pages 5616 - 5621, XP033889825, DOI: 10.1109/BIGDATA50022.2020.9377923
- BINYI SU ET AL: "SIGAN: A Novel Image Generation Method for Solar Cell Defect Segmentation and Augmentation", ARXIV.ORG, CORNELL UNIVERSITY LIBRARY, 201 OLIN LIBRARY CORNELL UNIVERSITY ITHACA, NY 14853, 11 April 2021 (2021-04-11), XP081935017

## Description

### BACKGROUND

### Field

The present disclosure is generally directed to visual inspection systems, and more specifically, to damage transfer methods with a region-based adversarial learning.

### Related Art

Automated visual inspection systems with Artificial Intelligence (AI) based models aim to streamline quality control, maintenance, repair and overall monitoring of objects. However, Al-based methods require large datasets to create robust models that learn conditions and characteristics of damages (e.g., appearance, size, glare, severity, background), across damages types (e.g., dents, scratches, corrosion), and assets types (e.g., vehicles, airplanes, building) with materials (e.g., concrete, plastic, metal).

Usually, customer datasets are limited to images with damages within similar conditions and context (e.g., having the same object, viewpoint, or background). Small dataset models may result in poor detection in field due to less generalization power, varying ambient and image conditions, especially in open spaces. For example, automated inspection (e.g., for vehicles, airplanes, buildings) is highly impacted by reflection and lighting conditions. Collecting images in diverse conditions and characteristics can be conducted manually, but is time and labor intensive, expensive, and in several cases almost infeasible. On the other hand, automated tools for image augmentation are still limited to basic tasks such as crop, rotation or change colors. Therefore, there is a need for an automated process that facilitates building datasets and models to generalize for damage regions, background, material, asset, and so on.
Document NIU SHUANLONG ET AL: "Defect Image Sample Generation With GAN for Improving Defect Recognition", IEEE TRANSACTIONS ON AUTOMATION SCIENCE AND ENGINEERING, IEEE SERVICE CENTER, NEW YORK, NY, US, vol. 17, no. 3, 17 February 2020 (2020-02-17), pages 1611-1622, XP011796937, ISSN: 1545-5955, DOI: 10.1109/TASE.2020.2967415 [retrieved on 2020-07-01] discloses an approach on defect image sample generation with GAN for improving defect recognition.

### SUMMARY

Model generalization is defined as the ability of the models to adapt to unseen or partially seen data used to create the model. This problem has been addressed by automated methods such as data augmentation, domain adaptation, and transfer learning techniques.

Related art implementations for data augmentation are limited to image transformations that do not learn the context and features of the region of interest, for example, damaged regions. These data augmentation methods mostly include color changes, rotation, or crops that do not learn fine-grain characteristics of damages that can facilitate damage transfer to images with new contexts, areas, assets or materials. Related art implementations also involve adversarial networks to facilitate the learning of relevant features, but not for region of interest such as damaged areas in an asset.

In the related art, there are also generative adversarial networks (GAN) to facilitate transfer learning, domain adaptation and image generation. GAN formulates the problem as a supervised learning problem with two components: a generator model that is trained to generate new examples, and a discriminator model that is trained to classify examples as real or fake. Both models are trained together in an adversarial way (zero-sum game) with the goal that the generator should fool with very close-to-real images and therefore the discriminator which is not able to distinguish fake images.

In domain adaptation and augmentation, image translation models based on GAN have demonstrated that is possible to generate realistic images that automate tasks of image variation to adapt to contexts or domains, change the style, transfigure the object, and so on. In related art implementations, there are also a GAN model using conditional network with paired images, (for example, A to B). Extensions of such related art implementations can involve a more robust model when the input images are not paired or aligned. These related art implementations that network can learn the relevant features from the overall images. However, the methods fail to transfer damaged features, since these networks are not able of learning the feature representation of the regions of interest (i.e., damaged region). Compared to this, the proposed method as described herein focuses on ensuring the learning of specific areas of interest that represent common features to be transferred to other data samples.

Further, there has been no work done in learning and transferring of damage representation for visual inspection methods. In related art implementations, there is an approach of learning damages on wood surfaces using conditional GAN(DCGAN). This approach learns image features instead of damage features. Such related art input images consist of simple regions of damaged wood without asset, object, or background complexities that facilitate the solution. In example implementations described herein, damages are learned from real-world images with objects, background and diverse damage views that make learning with simple conditional GAN method fail.

In contrast to related art implementations, the example implementations described herein provide a solution for learning and transferring damages over full or partial view of the asset with parts under variation of images. Since damages may be only a small portion of the image, there is a need of a method to focus on the fine-grained features that represent those areas of interest. State-of-the-art networks that do not use the example implementations of the present disclosure will fail to transfer the damages, while the example implementations described herein learn and transfer the damages to the extent image context.

The example implementations described herein address various problems, including the low generalization of damage detection models due to a lack of large datasets and diversity in context and conditions (e.g., appearance, size, lighting conditions, background, materials, or assets), as well as the lack of automated tools to generate improved datasets with diversity in images focused on areas of interest like damages.

Example implementations involve systems and methods that learn and transfer feature representations of damages from a small image dataset to a new dataset. The systems and methods learn damages (e.g., scratches, dent, corrosion), from objects (e.g., vehicles, airplane, appliance), across multiple contexts and conditions (e.g., size, shape, lighting, background), and materials (e.g., metal, wood, plastic). The example implementations introduce a generative adversarial network with a damage-region based learning to focus on disentangling the common representation of damages and difference between normal and damaged areas. The example implementations demonstrate that training a model with a damage-region based adversarial learning allows to capture and transfer fine-grained damage representation, while existing adversarial networks fail to learn the damages. Finally, the models proposed herein facilitate domain adaptation and data augmentation tasks to improve model generalization.

Specifically, example implementations provide an approach to increase generalization of AI-based visual inspection models across multiple image conditions, types of assets and materials. Damage detection models are highly impacted by a lack of large datasets with variations in image conditions (e.g., appearance(textures), size, severity, shape, background). Often, models are trained to detect damages on specific objects (e.g., vehicles, machines, buildings), with specific material such as metal, wood, concrete or plastic. However, having these narrow models trained on specific and usually small dataset limit model generalization and reduce detection quality for customer solutions. Therefore, model generalization is a challenge while deploying customer solutions if datasets are limited to few samples.

Example implementations address this problem by providing a method focused on learning surface features of an object with damage. Once a model is trained to learn common damage representation, the method transfers damages to other context, object or material for desired purposes such as domain adaptation, data augmentation tasks, and so on in accordance with the desired implementation.

Example implementations involve an adversarial network that extends a traditional architecture of a generator and a discriminator. The example implementations utilize a new damage-region based network to learn the function that differentiates normal and damaged features. During training, the traditional generator and discriminator learns the relevant features of the image along with the new generator-discriminator focuses on damage regions. The new discriminator uses a loss function that minimize the learning error in the damaged region, whereupon the error is backpropagated to both generators later. Therefore, both generators and discriminators learn features that capture damages derived from a small real-world training dataset with multiple objects, background, lighting conditions, and so on.

During the transferring, the example implementations use the trained model to apply the learned features to unseen images and generate new images with damages. Related-art methods fail to transfer the damages, since these methods only learn object-context features with the image discriminator, while example implementations learn both damage and object context and conditions. The example implementations successfully transfer damages, generating new images for multiple datasets with vehicles, parts of metal, concrete and wood.

As such, the example implementations described herein involve a mechanism to learn fine-grained feature representation of damages using region-of-interest based adversarial learning, and a mechanism to transfer damage feature representations to unseen images and generate new images using model trained from our region-of-interest based adversarial learning mechanism.

Aspects of the present disclosure can involve a method, which can involve training a model through images of an object type in undamaged form to learn the object type and regions of the object type through use of adversarial networks, the model configured to generate an image comprising a damaged region within the object type; and for receipt of an image comprising an object corresponding to the object type, executing the model on the image of the object to generate another image comprising the damaged region within the object.

Aspects of the present disclosure can involve a system, which can involve means for training a model through images of an object type in undamaged form to learn the object type and regions of the object type through use of adversarial networks, the model configured to generate an image comprising a damaged region within the object type; and for receipt of an image comprising an object corresponding to the object type, means for executing the model on the image of the object to generate another image comprising the damaged region within the object.

Aspects of the present disclosure can involve a computer program, which can involve instructions including training a model through images of an object type in undamaged form to learn the object type and regions of the object type through use of adversarial networks, the model configured to generate an image comprising a damaged region within the object type; and for receipt of an image comprising an object corresponding to the object type, executing the model on the image of the object to generate another image comprising the damaged region within the object. The computer program can be stored on memory and/or one or more computer readable mediums such as non-transitory computer readable mediums, and executed by one or more processors.

Aspects of the present involve an apparatus, which can involve a processor configured to train a model through images of an object type in undamaged form to learn the object type and regions of the object type through use of adversarial networks, the model configured to generate an image comprising a damaged region within the object type; and for receipt of an image comprising an object corresponding to the object type, execute the model on the image of the object to generate another image comprising the damaged region within the object. The computer program can be stored on memory and/or one or more computer readable mediums such as non-transitory computer readable mediums, and executed by one or more processors.

### BRIEF DESCRIPTION OF DRAWINGS

FIG. 1 illustrates an example damage transfer method, in accordance with an example implementation.
FIG. 2 illustrates an example of damage transfer, in accordance with an example implementation.
FIG. 3 illustrates an example general damage transfer method, in accordance with an example implementation.
FIG. 4 illustrates an example training of the damage transfer network, in accordance with an example implementation.
FIG. 5 illustrates an example testing of the damage transfer network, in accordance with an example implementation.
FIG. 6 illustrates an example of paired and aligned image for damage and normal objects, in accordance with an example implementation.
FIG. 7 illustrates an example of a damage transfer network with a local discriminator for paired images, in accordance with an example implementation.
FIG. 8 illustrates an example damage transfer method with region-based discriminator for paired image translation, in accordance with an example implementation.
FIG. 9 illustrates an example of unpaired images for damage and the normal object in accordance with an example implementation.
FIG. 10 illustrates an example of the network a cycle consistency network with damage-mask generator *Gᵣ* and discriminator *Dᵣ,* in accordance with an example implementation.
FIG. 11 illustrates an example of the damage transfer steps for unpaired and non-aligned images, in accordance with an example implementation.
FIG. 12 illustrates an example of generation during testing, in accordance with an example implementation.
FIG. 13 illustrates an example computing environment with an example computer device suitable for use in some example implementations.

### DETAILED DESCRIPTION

The following detailed description provides details of the figures and example implementations of the present application. Reference numerals and descriptions of redundant elements between figures are omitted for clarity. Terms used throughout the description are provided as examples and are not intended to be limiting. For example, the use of the term "automatic" may involve fully automatic or semi-automatic implementations involving user or administrator control over certain aspects of the implementation, depending on the desired implementation of one of ordinary skill in the art practicing implementations of the present application. Selection can be conducted by a user through a user interface or other input means, or can be implemented through a desired algorithm. Example implementations as described herein can be utilized either singularly or in combination and the functionality of the example implementations can be implemented through any means according to the desired implementations.

Example implementations involve systems and methods for damage transfer to augment an original small dataset with new images with context and condition variations. Damage is defined herein as the region of interest (RoI) of an object that deviates from normal texture, form, structure or color such as dent, scratch, corrosion, and so on. The region has a set of common features *F_{d}* that entails the visual characteristics of the damage. As a result of different context such as camera position, background objects, light, or physical force over the material, damages usually have *condition variations* such changes in appearance, size, shape, severity, and so on.

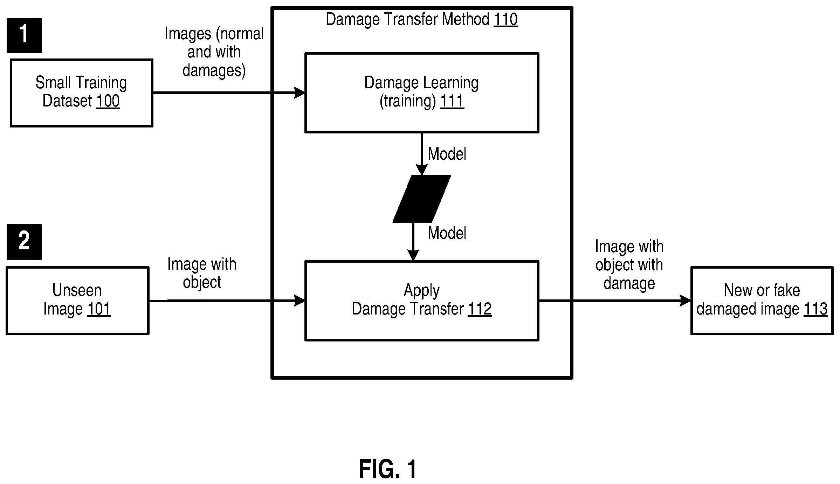

FIG. 1 illustrates an example damage transfer method, in accordance with an example implementation. Example implementations described herein involve a damage transfer method which uses a trained model with region-of-interest based adversarial learning that transforms normal (no-damage) images to new images with damage as illustrated in FIG. 1.

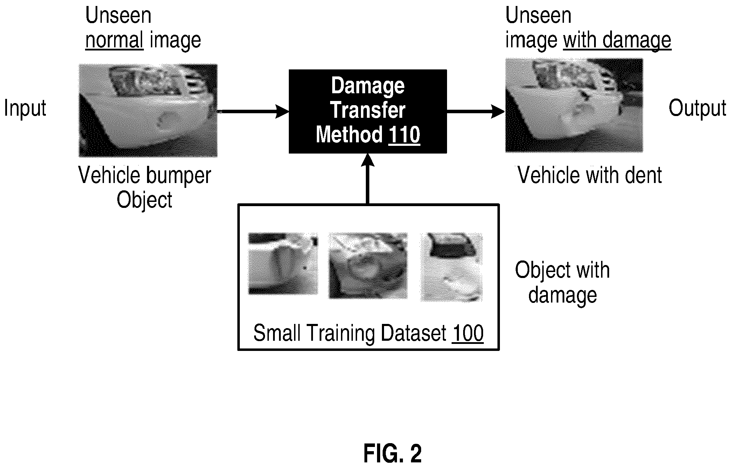

First, the method 110 learns the mapping 111 between normal and damage images from a latent feature space of a small training dataset 100. Second, the model is applied 112 to transfer damages to an unseen image 101 and generate a new image with a damage area 113 as is shown in FIG. 2. The new image is denoted as *fake image* since is autogenerated from the network. The damage transfer network is trained using end-to-end learning that introduces a damage mask (region of interest) discriminator which is focused on learning damage features from regions of interest, for example damage shape, texture, etc.

FIG. 2 illustrates an example of damage transfer with images, in accordance with an example implementation. The training dataset contains images of bumpers with damages and no damages. The input image, which does not exist in the training dataset, is passed through the damage transfer method to generate a fake damaged bumper image as an output.

Given a few samples of training images *I* with damaged regions *RoI_{d}* and normal regions *RoIₙ* over asset *A* of material *M,* damage transfer is defined as follows: Learn a damage feature vector *F_{d}* from image region of interest *RoI_{d},* so that G represents a function that transforms a normal asset *Aₙ* to a damage asset *A_{d}*. G: *Aₙ* → *A_{d},* such as *G(Aₙ) =A_{d}* and *R* represents a function that maps a region of interest *RoI* like the normal region to damage region such as *R: RoIₙ* → *RoI_{d}* such as *R(RoIₙ) = RoI_{d}.*

The goal is to learn G which represent the features of object from *A* and R that represents the features *F_{d}* of the region of interest *RoI* (damage) learned from a region-based generator-discriminator *Gᵣ-Dᵣ* using adversarial losses.

The goal of the method is to have a network that learns both object features, and region-of-interest based features (damage region) to distinguish among image context, object and the damage region. To achieve this, the network should learn normal object and damage regions with functions G and R which learn the distribution of the object and the distribution of the damage region.

Consider an image transformation method with a conditional adversarial network architecture that includes a) a discriminator *D* to learn features from training images; and b) generator *G* that learns the features using *G* loss and transfer them to new image. Example implementations described herein add a region-based generator and discriminator to achieve two goals: 1) object/context learning and 2) region-based (damaged) learning as follows; Object/Context learning G-*D* is able to distinguish target objects of interest like vehicles, roads, door, and so on. Region-based (damaged) adversarial learning with generator *Gᵣ* and discriminator *Dᵣ* learns the characteristics of the region of interest *RoI,* for example damages like dent, scratch, corrosion.

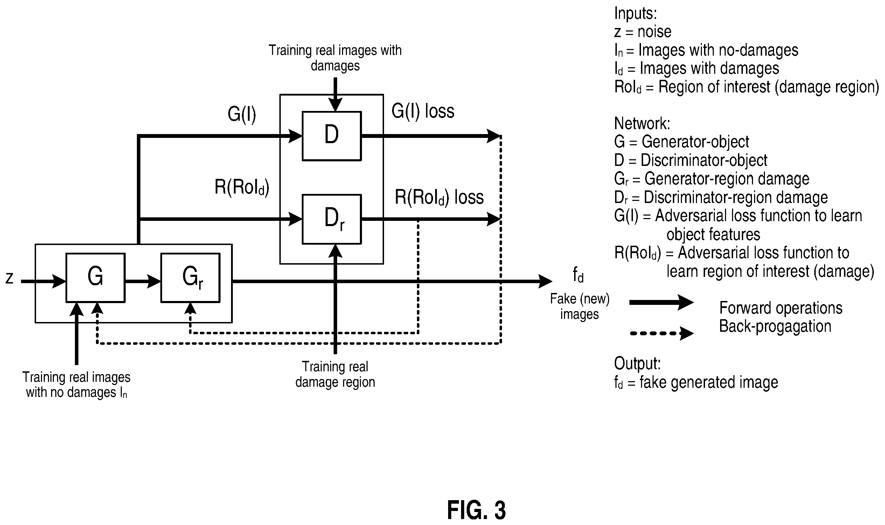

FIG. 3 illustrates an example general damage transfer method, in accordance with an example implementation. FIG. 3 illustrates the key components of the damage transfer network: object/context generator *G* and discriminator *D* and damage generator *Gᵣ* and discriminator *Dᵣ.* In the example of FIG. 3, the inputs can involve noise (*z*), images with no-damages (*Iₙ*)*,* images with damages (*I_{d}*)*,* and the region of interest such as the damaged region (*RoI_{d}*)*.*

The damage transfer network can involve generator-object (*G*), discriminator-object (D), Generator-region damage (*Gᵣ*)*,* Discriminator-region damage (*Dᵣ*)*,* Adversarial loss function to learn object features *G(I)*, and adversarial loss function to learn the region of interest/damage region *R(RoI_{d}).* The output of the general damage transfer method is the fake generated image f_{d}.

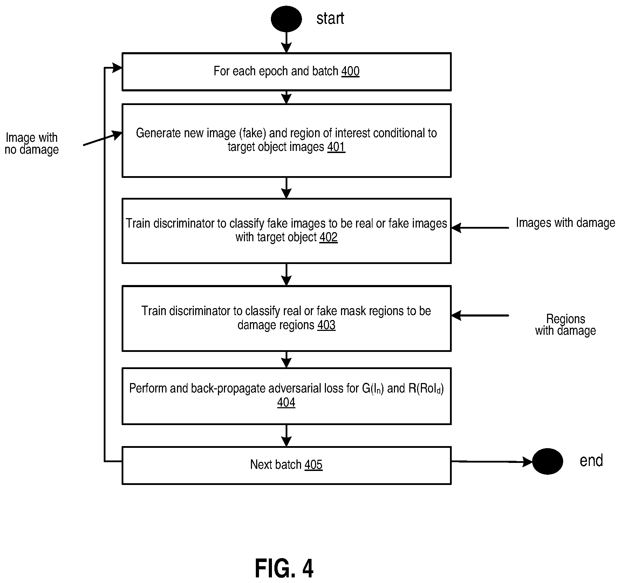

FIG. 4 illustrates an example training of the damage transfer network, in accordance with an example implementation. The proposed method involves two main tasks: training and transfer. During training, the network is trained end-to-end as is illustrated in FIG. 4. The input dataset includes images with damages and no-damages (normal). The method learns damaged regions using the damage Generator-discriminator *Gᵣ-Dᵣ* and the generator learns features *G(I)* and *R(I)* to transform a normal image to a damage imaged using input labels. The labels include the class of the training image denoted as *real images:* damage or normal, and mask region of damage when the images have a damage. The method generates the output denoted as *fake image* with *fake damaged region.* Each image generation is evaluated against the discriminators which determine whether the fake image is generated very close to the real images and damaged regions or not. The loss is backpropagated to the generators in order to learn good and bad generations for next iteration. Finally, example implementations evaluate the model using techniques such as the FID score. This score indicates a quality level of the learning and generation of damages and objects. The training algorithm involves the following steps shown in FIG. 4.

In the example flow, the input can involve damage image I_{d}, normal images Iₙ, and the batch size m. At 400, the flow is executed for each epoch and batch of m images. At 401, a batch of real normal images is loaded, as well as images with damages and damage regions. In this flow, the algorithm performs the generation of fake images f_{d} and fake regions of interest fᵣ that are conditional to the target object images. At 402 and 403, the flow then trains the context object discriminator D for the current batch and train for the region-based discriminator Dᵣ. That is, from the images with damage, the context object discriminator D is trained to classify fake images to be real or fake based on the target object at 402. At 403, from the regions with damage, the region-based discriminator Dᵣ trains the discriminator to classify real or fake mask regions to be damage regions. At 404, the algorithm performs the adversarial loss for fake image G(I_{d/}Iₙ) loss and back-propagate to the generators, and for fake region R(I_{d}/Iₙ) loss and back-propagate to generators. Then the flow proceeds to the next batch 405. Finally the algorithm will determine the score for testing the dataset.

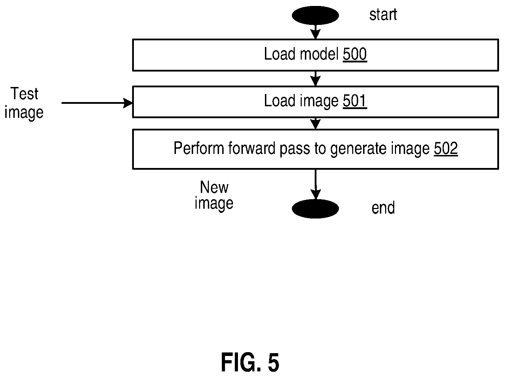

Once the model is trained, the model is ready to apply the damage transfer to input reference images along with random noise. The generator performs a forward pass and generates an image similar to the reference, but with damage. No region labels are needed, the model generates the damage region based on the learned features *F_{d}* during training. FIG. 5 illustrates an example testing of the damage transfer network, in accordance with an example implementation. The damage transfer algorithm includes the following steps in FIG. 5.

For the flow of FIG. 5, the input is an unseen image. At 500, the algorithm loads the model. At 501, the algorithm loads the reference input image. At 502, the algorithm performs a forward pass to generate a fake image. The output is thereby the new image.

The following description involves example implementations of the general method in two types of the state-of-the art networks: a) image translation with paired images and b) image translation with cycle-consistency for unpaired images.

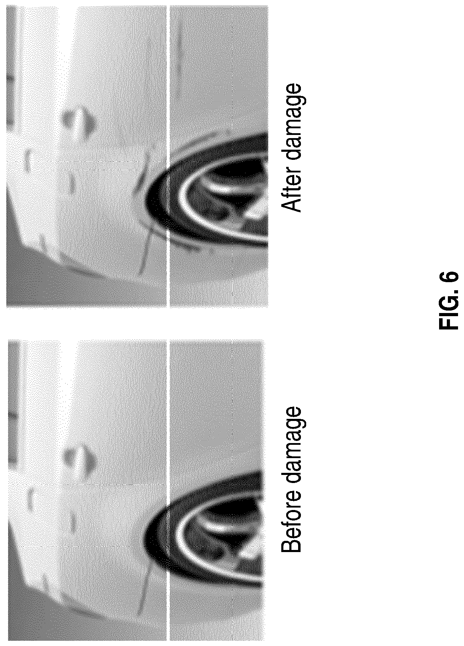

FIG. 6 illustrates an example of paired and aligned image for damage and normal objects, in accordance with an example implementation. Paired and aligned images are defined as a list of pair of images which are very similar, but one has a damage and the other is normal, also known as before/after images.

Consider an example implementation involving an image transformation model trained from a set of paired aligned images. The conditional transformation network is formally composed by two main components: encoder-decoder *G* generator and Patch discriminator *D*. However, the network fails to learn damaged areas since they are fine-grained features over the whole image. The example implementations described herein address such issues by incorporating a region-based discriminator that enables the learning of the damage area as is proposed in our general method.

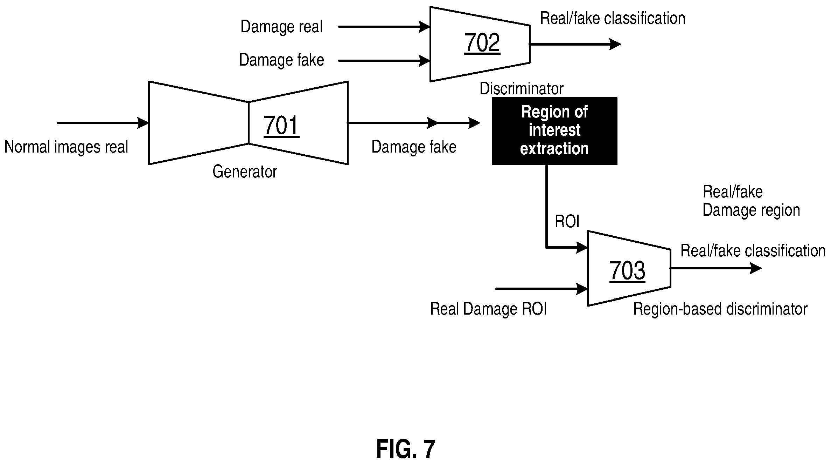

Given a few samples of paired and aligned images for normal and damaged object, learn *G(I)* and *R(I)* functions to transfer damage features to a new image. FIG. 7 illustrates an example of a damage transfer network with a local discriminator for paired images, in accordance with an example implementation.

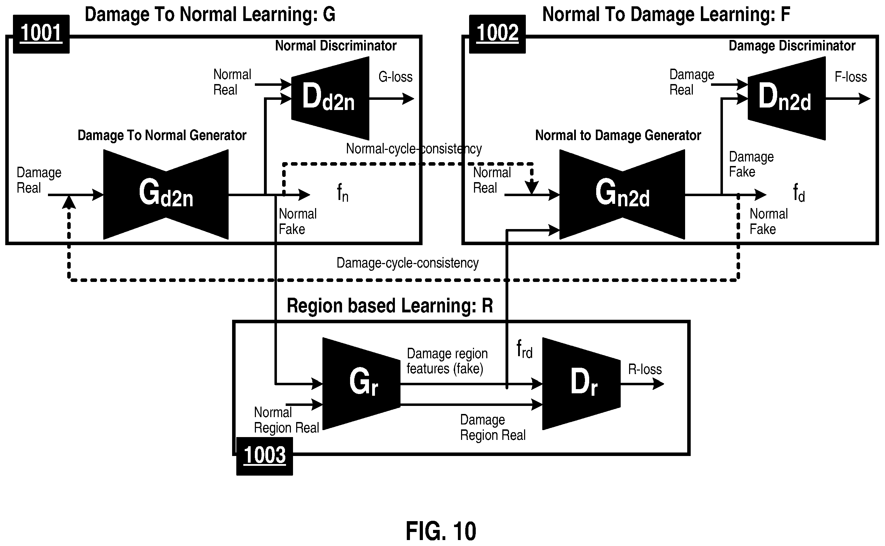

In an example implementation of a generator, there is an encoder-decoder component that captures features from the images at multiple levels with skip connections (UNET), though other implementations may be used besides UNET and the present disclosure is not limited thereto. In the example implementation of FIG. 7, the model involves a UNET generator and two patch discriminator one for the whole image and the other is for the Damage *ROI.* The generated image is fed into the image discriminator and local discriminator that compute the function loss. The error is later backpropagated to the generator to improve the image translation network. The training and transfer process follows the general method defined in FIG. 4 and FIG. 5. The method is evaluated by using sample images involving images of normal vehicles and damaged vehicles, paired and aligned. As illustrated in the damage transfer network of FIG. 7, there is a generator 701, a real/fake classification 702, and a region-based discriminator 703, further details of which are provided with respect to FIG. 10.

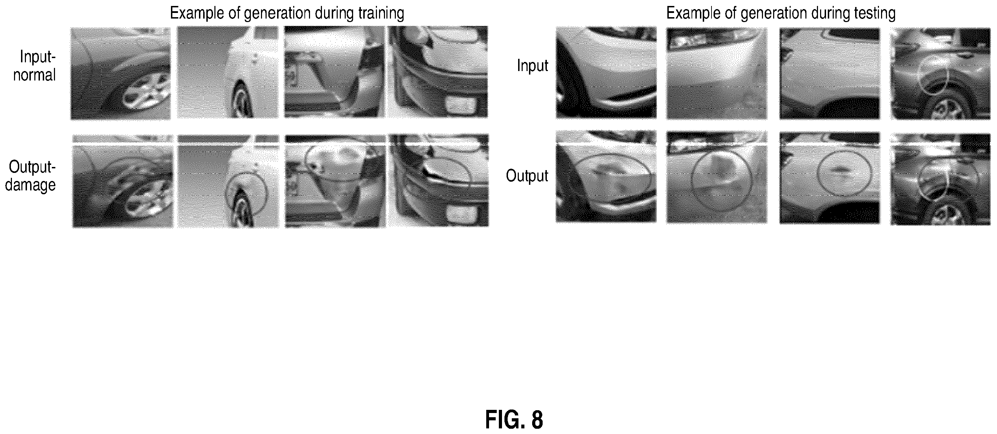

FIG. 8 illustrates an example damage transfer method with region-based discriminator for paired image translation, in accordance with an example implementation.

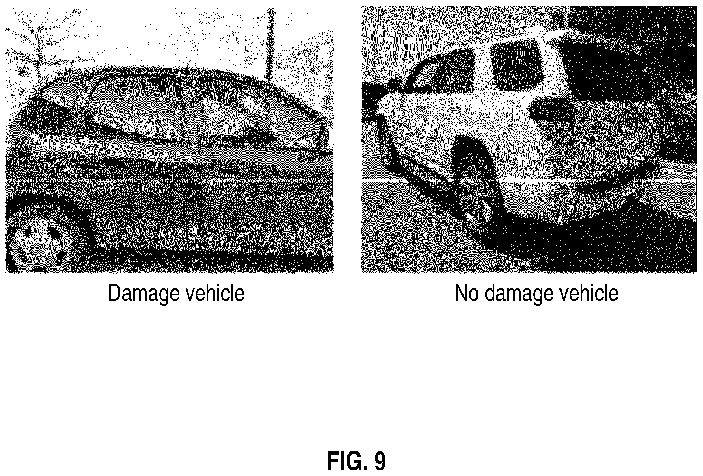

With regards to damage transfer for unpaired and non-aligned images, Unpaired and non-aligned images are defined as a pair of images which are random context, view, size, appearance, etc., of the object. FIG. 9 illustrates an example of unpaired images for damage and the normal object in accordance with an example implementation.

Consider an embodiment as the image transformation model trained from a training set of paired aligned images with cycle-consistency, known as cycleGAN. This network is formally composed by four main components: encoder-decoder *G* generator and Patch discriminator *D_{Y} to map image X to new image Y.* The cycle-consistency is defined as the capability of the method to transform the image, and then used the transformed image to reconstruct into the original image. Formally, the cycle-consistency components include a function *F* with Patch discriminator *Dₓ to map new image Y to original image X* to minimize reconstruction loss.

Based on experiments, the above network fails to learn damages areas for damage transfer due to the method is not sensitive on specific regions and small datasets are not enough to learn the damage characteristics. The proposed method solves this problem by incorporating a region-based (damage) adversarial network that enable the learning of the damage area as is proposed in our general method. FIG. 10 illustrates an example of the network a cycle consistency network with damage-mask generator *Gᵣ* and discriminator *Dᵣ,* in accordance with an example implementation.

Given a few samples of unpaired and random images for normal and damaged object, the flow learns *G-R-F* functions 1001, 1002, and 1003 to transfer damage features to new image. As described herein, example implementations involve the cycle-consistency method with *F* reconstruction function to improve transfer features across unpaired and non-aligned images. The proposed network introduces *R* function 1003 as region-based generator and discriminator, and keeps cycle-consistency over the full images, normal-to-damage and damage-to-normal reconstruction defined by functions *G* 1001 and iF 1002. In order to improve the damage learning, the generator uses a reconstruction loss which focuses on learning the mapping of normal-to-damage feature representation *R* with the corresponding region-based discriminator for the generator region as described herein.

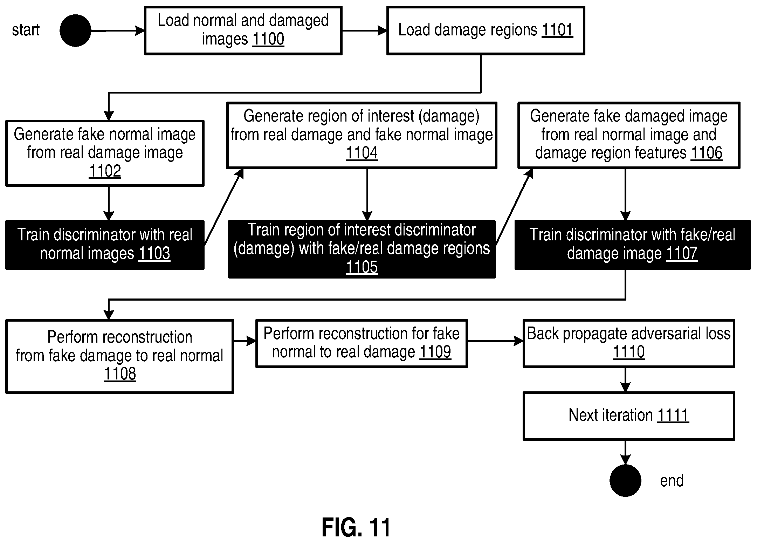

During training, the network presented in FIG. 10 include the steps illustrated in FIG. 11. FIG. 11 illustrates an example of the damage transfer steps for unpaired and non-aligned images, in accordance with an example implementation.
Where:
*I*_{*n* =} Image with no-damage object
*I*_{*d* =} Image with damage object
*f_{d} =* fake image generated with damages,
*fₙ* = fake image generated - normal,
*f_{rd} =* fake region generated - damÅaged,
*f_{d2n2d}* = damage to normal to damage (cycle-consistency)
*n₂d* = transferring from normal to damage,
*d₂n* = reconstructing from damage to normal image,
*G_{n2d}*(*Iₙ*) = G function from normal to damage image,
*G_{d2n}*(*I_{d}*) *=* G from damage to normal image,
*G-loss* = Mapping G: X-Y,
F-loss = Reconstruction loss F:Y-X,
R-loss = Region loss,
*R*(*f_{d2n}*)*=* Region-based from damage to normal image,
*F_{d} =* Damage features,
*R*(*f_{d2n}*)*=* Region-based from damage to normal image

The training method performs two main operations. The first main operations are forward operations which are related to the transfer from one domain to another. For the forward operations, there is a transfer of damage to the fake non-damaged image: *fₙ = G*_{*d*2*n*}(*I_{d}*)*,* generation of the corresponding damage region-based: *fᵣ = R*(*f_{d2n}*), and the transfer of the normal image to fake damage image: *f*_{*d* =} *G*_{*n*2*d*}(*Iₙ*)*.*

The second main operations are cycle operations which aim to reconstruct the original image from the generated image. For the cycle operations, there is a reconstruction of damage to normal and normal to damage images: *f*_{*d*2*n*2}*_{d} =G*_{*n*2*d*}(*G*_{*d*2*n*}(*I_{d}*))*.*

During damage transfer (inference/testing pass), the method uses the same steps that the general method described in FIG. 5. The generator uses an unseen image as an input; and transfers damage feature representation to generate a new damaged image. As part of this process, the reconstruction generation is optional.

In the flow of FIG. 11, the black boxes indicate the use of the network. At first the damage transfer process loads normal and damaged images as well as damaged regions at 1101. Based on the example implementations described herein, the flow generates fake images from real damage image 1102. The discriminator can then be trained with the real normal images at 1103. At 1104, the generator is used to generate a region of interest (e.g. with damage) from real damage images and fake normal images. At 1105, the ROI discriminator is trained with fake/real damage regions. At 1106, the flow generate fake damaged image from real normal image and damage region features. At 1107, the flow trains the discriminator with fake/real discriminator images. At 1108, the flow performs the reconstruction from fake damage images to real normal images. At 1109, the flow performs reconstruction for fake normal images to real damage images. At 1110 the adversarial loss is back-propagated. At 1111, the next iteration is conducted.

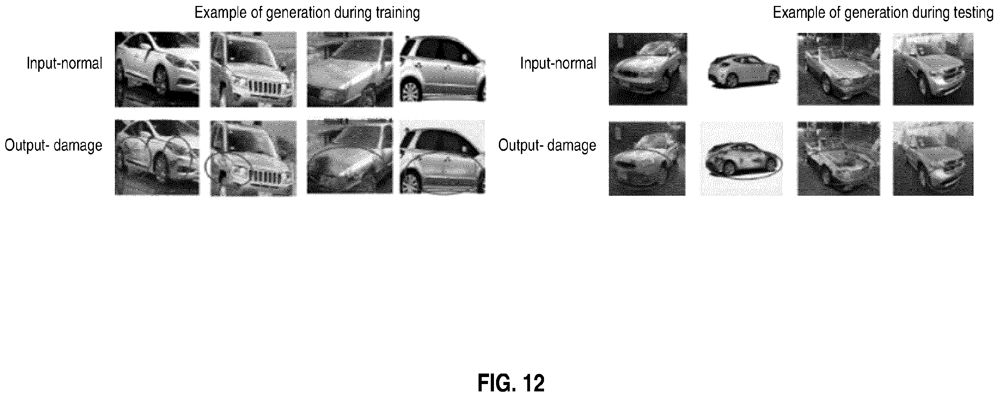

The proposed method is evaluated by using sample images with damages and normal images, unpaired and non-aligned as illustrated in FIG. 12. FIG. 12 illustrates an example of generation during testing, in accordance with an example implementation.

Examples of object images that can be used in example implementations can be adjusted according to the desired implementation and the industry field. For example, transportation (e.g., trucks, vehicle, train, airplane, etc.), energy (e.g., winter binds, solar panels, powerline etc.), manufacturing (e.g., production line inspections), construction (e.g., buildings, roof, etc.), mining (e.g., cranes, excavators, trucks, etc.) and so on.

The inspection goals within each vertical can be related but not limited to maintenance and repair, quality control or equipment monitoring.

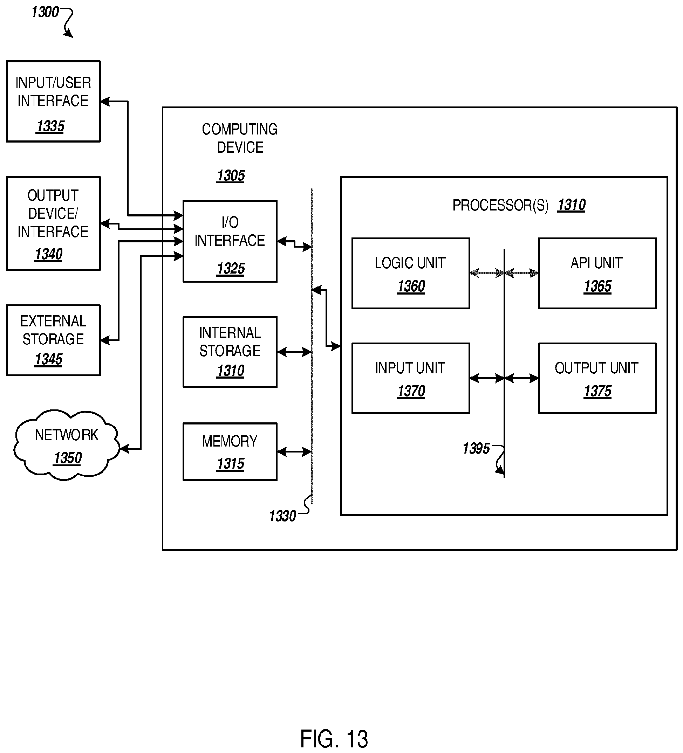

FIG. 13 illustrates an example computing environment with an example computer device suitable for use in some example implementations.

Computer device 1305 in computing environment 1300 can include one or more processing units, cores, or processors 1310, memory 1315 (e.g., RAM, ROM, and/or the like), internal storage 1320 (e.g., magnetic, optical, solid state storage, and/or organic), and/or I/O interface 1325, any of which can be coupled on a communication mechanism or bus 1330 for communicating information or embedded in the computer device 1305. I/O interface 1325 is also configured to receive images from cameras and data from any other sensors / devices or provide images to projectors or displays, depending on the desired implementation.

Computer device 1305 can be communicatively coupled to input/user interface 1335 and output device/interface 1340. Either one or both of input/user interface 1335 and output device/interface 1340 can be a wired or wireless interface and can be detachable. Input/user interface 1335 may include any device, component, sensor, or interface, physical or virtual, that can be used to provide input (e.g., buttons, touch-screen interface, keyboard, a pointing/cursor control, microphone, camera, braille, motion sensor, optical reader, and/or the like). Output device/interface 1340 may include a display, television, monitor, printer, speaker, braille, or the like. In some example implementations, input/user interface 1335 and output device/interface 1340 can be embedded with or physically coupled to the computer device 1305. In other example implementations, other computer devices may function as or provide the functions of input/user interface 1335 and output device/interface 1340 for a computer device 1305.

Examples of computer device 1305 may include, but are not limited to, highly mobile devices (e.g., smartphones, devices in vehicles and other machines, devices carried by humans and animals, and the like), mobile devices (e.g., tablets, notebooks, laptops, personal computers, wearables, portable televisions, radios, robots, drones, smart glasses, and the like), and devices not designed for mobility (e.g., desktop computers, other computers, information kiosks, televisions with one or more processors embedded therein and/or coupled thereto, radios, and the like).

Computer device 1305 can be communicatively coupled (e.g., via I/O interface 1325) to external storage 1345 and network 1350 for communicating with any number of networked components, devices, and systems, including one or more computer devices of the same or different configuration. Computer device 1305 or any connected computer device can be functioning as, providing services of, or referred to as a server, client, thin server, general machine, special-purpose machine, or another label.

I/O interface 1325 can include, but is not limited to, wired and/or wireless interfaces using any communication or I/O protocols or standards (e.g., Ethernet, 802.11x, Universal System Bus, WiMax, modem, a cellular network protocol, and the like) for communicating information to and/or from at least all the connected components, devices, and network in computing environment 1300. Network 1350 can be any network or combination of networks (e.g., the Internet, local area network, wide area network, a telephonic network, a cellular network, satellite network, and the like).

Computer device 1305 can use and/or communicate using computer-usable or computer-readable media, including transitory media and non-transitory media. Transitory media include transmission media (e.g., metal cables, fiber optics), signals, carrier waves, and the like. Non-transitory media include magnetic media (e.g., disks and tapes), optical media (e.g., CD ROM, digital video disks, Blu-ray disks), solid state media (e.g., RAM, ROM, flash memory, solid-state storage), and other non-volatile storage or memory.

Computer device 1305 can be used to implement techniques, methods, applications, processes, or computer-executable instructions in some example computing environments. Computer-executable instructions can be retrieved from transitory media and stored on and retrieved from non-transitory media. The executable instructions can originate from one or more of any programming, scripting, and machine languages (e.g., C, C++, C#, Java, Visual Basic, Python, Perl, JavaScript, and others).

Processor(s) 1310 can execute under any operating system (OS) (not shown), in a native or virtual environment. One or more applications can be deployed that include logic unit 1360, application programming interface (API) unit 1365, input unit 1370, output unit 1375, and inter-unit communication mechanism 1395 for the different units to communicate with each other, with the OS, and with other applications (not shown). The described units and elements can be varied in design, function, configuration, or implementation and are not limited to the descriptions provided.

In some example implementations, when information or an execution instruction is received by API unit 1365, it may be communicated to one or more other units (e.g., logic unit 1360, input unit 1370, output unit 1375). In some instances, logic unit 1360 may be configured to control the information flow among the units and direct the services provided by API unit 1365, input unit 1370, output unit 1375, in some example implementations described above. For example, the flow of one or more processes or implementations may be controlled by logic unit 1360 alone or in conjunction with API unit 1365. The input unit 1370 may be configured to obtain input for the calculations described in the example implementations, and the output unit 1375 may be configured to provide output based on the calculations described in example implementations.

Processor(s) 1310 can be configured to train a model through images of an object type in undamaged form to learn the object type and regions of the object type through use of adversarial networks, the model configured to generate an image involving a damaged region within the object type; and for receipt of an image involving an object corresponding to the object type, execute the model on the image of the object to generate another image comprising the damaged region within the object through the example implementations described herein as illustrated in FIGS. 1-5.

Processor(s) 1310 can be configured to train the model through the images of the object type in undamaged form to learn the object type and regions of the object type through use of the adversarial networks by training an object discriminator and an object generator in the adversarial networks from the images of the object type in the undamaged form to learn the object type; learning a damage feature vector for one or more region of interests of the object type from the images of the object type in undamaged form and other images of the object type in damaged form; and training a damage generator and damage discriminator in the adversarial networks from the damage feature vector to transform the images of the object type in undamaged form to transformed images of the object type with damage in the one or more regions of interest as illustrated in FIG. 3.

Processor(s) 1310 can be configured to train the model through the images of the object type in undamaged form to learn the object type and regions of the object type through use of the adversarial networks by training a generator in the adversarial networks to generate fake images comprising fake damaged regions from the images of the object type in undamaged form; training an object discriminator to discern damaged versus undamaged images of the object type from the images of the object type in undamaged form and other images of the object type in damaged form with damage regions; training a region-based discriminator to discern the damaged regions in the object type from the other images of the object type in the damaged form with the damaged regions; performing adversarial loss for the fake images comprising fake damaged regions from the object discriminator and the region-based discriminator; and back-propagating the adversarial loss to the generator as illustrated in FIG. 8.

Processor(s) 1310 can be configured to train the model through the images of the object type in undamaged form to learn the object type and the regions of the object type through use of adversarial networks by training a damage-to-normal generator in the adversarial networks to generate fake images comprising fake undamaged regions from other images of the object type in damaged form; learning a damage feature vector for one or more region of interests of the object type from the other images of the object type in damaged form and the fake images comprising the fake undamaged regions; training a normal-to-damage reconstructor in the adversarial networks to learn a mapping of normal-to-damage features from the damage feature vector, the normal-to-damage reconstructor configured to transform the fake images comprising the fake undamaged regions to the other images of the object type in the damaged form; and back-propagating adversarial loss of the normal-to-damage reconstructor to the damage-to-normal generator as illustrated in FIG. 10 to FIG. 12.

Some portions of the detailed description are presented in terms of algorithms and symbolic representations of operations within a computer. These algorithmic descriptions and symbolic representations are the means used by those skilled in the data processing arts to convey the essence of their innovations to others skilled in the art. An algorithm is a series of defined steps leading to a desired end state or result. In example implementations, the steps carried out require physical manipulations of tangible quantities for achieving a tangible result.

Unless specifically stated otherwise, as apparent from the discussion, it is appreciated that throughout the description, discussions utilizing terms such as "processing," "computing," "calculating," "determining," "displaying," or the like, can include the actions and processes of a computer system or other information processing device that manipulates and transforms data represented as physical (electronic) quantities within the computer system's registers and memories into other data similarly represented as physical quantities within the computer system's memories or registers or other information storage, transmission or display devices.

Example implementations may also relate to an apparatus for performing the operations herein. This apparatus may be specially constructed for the required purposes, or it may include one or more general-purpose computers selectively activated or reconfigured by one or more computer programs. Such computer programs may be stored in a computer readable medium, such as a computer-readable storage medium or a computer-readable signal medium. A computer-readable storage medium may involve tangible mediums such as, but not limited to optical disks, magnetic disks, read-only memories, random access memories, solid state devices and drives, or any other types of tangible or non-transitory media suitable for storing electronic information. A computer readable signal medium may include mediums such as carrier waves. The algorithms and displays presented herein are not inherently related to any particular computer or other apparatus. Computer programs can involve pure software implementations that involve instructions that perform the operations of the desired implementation.

Various general-purpose systems may be used with programs and modules in accordance with the examples herein, or it may prove convenient to construct a more specialized apparatus to perform desired method steps. In addition, the example implementations are not described with reference to any particular programming language. It will be appreciated that a variety of programming languages may be used to implement the techniques of the example implementations as described herein. The instructions of the programming language(s) may be executed by one or more processing devices, e.g., central processing units (CPUs), processors, or controllers.

As is known in the art, the operations described above can be performed by hardware, software, or some combination of software and hardware. Various aspects of the example implementations may be implemented using circuits and logic devices (hardware), while other aspects may be implemented using instructions stored on a machine-readable medium (software), which if executed by a processor, would cause the processor to perform a method to carry out implementations of the present application. Further, some example implementations of the present application may be performed solely in hardware, whereas other example implementations may be performed solely in software. Moreover, the various functions described can be performed in a single unit, or can be spread across a number of components in any number of ways. When performed by software, the methods may be executed by a processor, such as a general purpose computer, based on instructions stored on a computer-readable medium. If desired, the instructions can be stored on the medium in a compressed and/or encrypted format.

## Claims

1. A method, comprising:
training a model through images of an object type in undamaged form to learn the object type and regions of the object type through use of adversarial networks, the model configured to generate an image comprising a damaged region within the object type; and
for receipt of a unseen image comprising an object corresponding to the object type, executing the model on the unseen image of the object to generate another image comprising the damaged region within the object,
**characterized in that**
the training the model through the images of the object type in undamaged form to learn the object type and regions of the object type through use of the adversarial networks comprises one of the following:
training an object generator and object discriminator in the adversarial networks from the images of the object type in the undamaged form and thereby learn the object type;
learning a damage feature vector for one or more region of interests of the object type from the images of the object type in undamaged form and other images of the object type in damaged form; and
training a damage generator and damage discriminator in the adversarial networks from the damage feature vector to transform the images of the object type in undamaged form to transformed images of the object type with damage in the one or more regions of interest,
or
training a generator in the adversarial networks to generate fake images comprising fake damaged regions from the images of the object type in undamaged form;
training an object discriminator to discern damaged versus undamaged images of the object type from the images of the object type in undamaged form and other images of the object type in damaged form with damage regions;
training a region-based discriminator to discern the damaged regions in the object type from the other images of the object type in the damaged form with the damaged regions;
performing adversarial loss for the fake images comprising fake damaged regions from the object discriminator and the region-based discriminator; and
back-propagating the adversarial loss to the generator,
or
training a damage-to-normal generator in the adversarial networks to generate fake images comprising fake undamaged regions from other images of the object type in damaged form; and
learning a damage feature vector for one or more region of interests of the object type from the other images of the object type in damaged form and the fake images comprising the fake undamaged regions.

2. The method of claim 1, wherein when the training the model through the images of the object type in undamaged form to learn the object type and the regions of the object type through use of adversarial networks comprises:
training a damage-to-normal generator in the adversarial networks to generate fake images comprising fake undamaged regions from other images of the object type in damaged form; and
learning a damage feature vector for one or more region of interests of the object type from the other images of the object type in damaged form and the fake images comprising the fake undamaged regions,
the training the model through the images of the object type in undamaged form to learn the object type and the regions of the object type through use of adversarial networks further comprises:
training a normal-to-damage reconstructor in the adversarial networks to learn a mapping of normal-to-damage features from the damage feature vector, the normal-to-damage reconstructor configured to transform the fake images comprising the fake undamaged regions to the other images of the object type in the damaged form; and
back-propagating adversarial loss of the normal-to-damage reconstructor to the damage-to-normal generator.

3. A non-transitory computer readable medium, storing instructions for executing a process, the instructions comprising:
training a model through images of an object type in undamaged form to learn the object type and regions of the object type through use of adversarial networks, the model configured to generate an image comprising a damaged region within the object type; and
for receipt of a unseen image comprising an object corresponding to the object type, executing the model on the unseen image of the object to generate another image comprising the damaged region within the object,
**characterized in that**
the training the model through the images of the object type in undamaged form to learn the object type and regions of the object type through use of the adversarial networks comprises one of the following:
training an object generator and object discriminator in the adversarial networks from the images of the object type in the undamaged form to learn the object type;
learning a damage feature vector for one or more region of interests of the object type from the images of the object type in undamaged form and other images of the object type in damaged form; and
training a damage generator in the adversarial networks from the damage feature vector to transform the images of the object type in undamaged form to transformed images of the object type with damage in the one or more regions of interest,
or
training a generator in the adversarial networks to generate fake images comprising fake damaged regions from the images of the object type in undamaged form;
training an object discriminator to discern damaged versus undamaged images of the object type from the images of the object type in undamaged form and other images of the object type in damaged form with damage regions;
training a region-based discriminator to discern the damaged regions in the object type from the other images of the object type in the damaged form with the damaged regions;
performing adversarial loss for the fake images comprising fake damaged regions from the object discriminator and the region-based discriminator; and
back-propagating the adversarial loss to the generator,
or
training a damage-to-normal generator in the adversarial networks to generate fake images comprising fake undamaged regions from other images of the object type in damaged form; and
learning a damage feature vector for one or more region of interests of the object type from the other images of the object type in damaged form and the fake images comprising the fake undamaged regions.

4. The non-transitory computer readable medium of claim 3, wherein when the training the model through the images of the object type in undamaged form to learn the object type and the regions of the object type through use of adversarial networks comprises:
training a damage-to-normal generator in the adversarial networks to generate fake images comprising fake undamaged regions from other images of the object type in damaged form; and
learning a damage feature vector for one or more region of interests of the object type from the other images of the object type in damaged form and the fake images comprising the fake undamaged regions,
the training the model through the images of the object type in undamaged form to learn the object type and the regions of the object type through use of adversarial networks further comprises:
training a normal-to-damage reconstructor in the adversarial networks to learn a mapping of normal-to-damage features from the damage feature vector, the normal-to-damage reconstructor configured to transform the fake images comprising the fake undamaged regions to the other images of the object type in the damaged form; and
back-propagating adversarial loss of the normal-to-damage reconstructor to the damage-to-normal generator.

5. An apparatus, comprising:
a processor, configured to:
train a model through images of an object type in undamaged form to learn the object type and regions of the object type through use of adversarial networks, the model configured to generate an image comprising a damaged region within the object type; and
for receipt of a unseen image comprising an object corresponding to the object type, execute the model on the unseen image of the object to generate another image comprising the damaged region within the object,
**characterized in that**
the processor is configured to train the model through the images of the object type in undamaged form to learn the object type and regions of the object type through use of the adversarial networks by one of the following:
training an object generator and an object discriminator in the adversarial networks from the images of the object type in the undamaged form to learn the object type;
learning a damage feature vector for one or more region of interests of the object type from the images of the object type in undamaged form and other images of the object type in damaged form; and
training a damage generator in the adversarial networks from the damage feature vector to transform the images of the object type in undamaged form to transformed images of the object type with damage in the one or more regions of interest,
or
training a generator in the adversarial networks to generate fake images comprising fake damaged regions from the images of the object type in undamaged form;
training an object discriminator to discern damaged versus undamaged images of the object type from the images of the object type in undamaged form and other images of the object type in damaged form with damage regions;
training a region-based discriminator to discern the damaged regions in the object type from the other images of the object type in the damaged form with the damaged regions;
performing adversarial loss for the fake images comprising fake damaged regions from the object discriminator and the region-based discriminator; and
back-propagating the adversarial loss to the generator,
or
training a damage-to-normal generator in the adversarial networks to generate fake images comprising fake undamaged regions from other images of the object type in damaged form;
learning a damage feature vector for one or more region of interests of the object type from the other images of the object type in damaged form and the fake images comprising the fake undamaged regions.

6. The apparatus of claim 5, wherein when the processor is configured to train the model through the images of the object type in undamaged form to learn the object type and the regions of the object type through use of adversarial networks by:
training a damage-to-normal generator in the adversarial networks to generate fake images comprising fake undamaged regions from other images of the object type in damaged form;
learning a damage feature vector for one or more region of interests of the object type from the other images of the object type in damaged form and the fake images comprising the fake undamaged regions,
the processor is further configured to train the model through the images of the object type in undamaged form to learn the object type and the regions of the object type through use of adversarial networks by:
training a normal-to-damage reconstructor in the adversarial networks to learn a mapping of normal-to-damage features from the damage feature vector, the normal-to-damage reconstructor configured to transform the fake images comprising the fake undamaged regions to the other images of the object type in the damaged form; and
back-propagating adversarial loss of the normal-to-damage reconstructor to the damage-to-normal generator.

## Patentansprüche

1. Verfahren, umfassend:
Trainieren eines Modells anhand von Bildern eines Objekttyps in unbeschädigter Form, um den Objekttyp und Bereiche des Objekttyps unter Verwendung von gegnerischen Netzwerken zu lernen, wobei das Modell so konfiguriert ist, dass es ein Bild erzeugt, das einen beschädigten Bereich innerhalb des Objekttyps umfasst; und
Ausführen des Modells auf das ungesehene Bild des Objekts, um ein weiteres Bild zu erzeugen, das den beschädigten Bereich innerhalb des Objekts umfasst, wenn ein ungesehenes Bild empfangen wird, das ein Objekt umfasst, das dem Objekttyp entspricht,
**dadurch gekennzeichnet, dass**
das Trainieren des Modells anhand von Bildern des Objekttyps in unbeschädigter Form, um den Objekttyp und Bereiche des Objekttyps unter Verwendung der gegnerischen Netzwerke zu lernen, eines der folgenden umfasst:
Trainieren eines Objektgenerators und eines Objektdiskriminators in den gegnerischen Netzwerken anhand der Bilder des Objekttyps in unbeschädigter Form, um dadurch den Objekttyp zu lernen;
Lernen eines Schadensmerkmalsvektors für einen oder mehrere Bereiche von Interesse des Objekttyps aus den Bildern des Objekttyps in unbeschädigter Form und anderen Bildern des Objekttyps in beschädigter Form; und
Trainieren eines Schadensgenerators und eines Schadensdiskriminators in den gegnerischen Netzwerken anhand des Schadensmerkmalsvektors, um die Bilder des Objekttyps in unbeschädigter Form in transformierte Bilder des Objekttyps mit Schäden in dem einen oder den mehreren interessierenden Bereichen umzuwandeln,
oder
Trainieren eines Generators in den gegnerischen Netzwerken, um gefälschte Bilder zu erzeugen, die gefälschte beschädigte Bereiche aus den Bildern des Objekttyps in unbeschädigter Form umfassen;
Trainieren eines Objektdiskriminators, um beschädigte Bilder des Objekttyps von den Bildern des Objekttyps in unbeschädigter Form und anderen Bildern des Objekttyps in beschädigter Form mit beschädigten Bereichen zu unterscheiden;
Trainieren eines bereichsbasierten Diskriminators, um die beschädigten Bereiche im Objekttyp von den anderen Bildern des Objekttyps in beschädigter Form mit den beschädigten Bereichen zu unterscheiden;
Durchführung einer gegnerischen Verlustfunktion für die gefälschten Bilder, die gefälschte beschädigte Bereiche enthalten, durch den Objektdiskriminator und den bereichsbasierten Diskriminator; und
Rückübertragung des gegnerischen Verlusts an den Generator,
oder
Trainieren eines Schadens-zu-Normal-Generators in den gegnerischen Netzwerken, um gefälschte Bilder zu erzeugen, die gefälschte unbeschädigte Bereiche aus anderen Bildern des Objekttyps in beschädigter Form umfassen; und
Lernen eines Schadensmerkmalsvektors für einen oder mehrere Bereiche von Interesse des Objekttyps aus den anderen Bildern des Objekttyps in beschädigter Form und den gefälschten Bildern, die die gefälschten unbeschädigten Bereiche umfassen.

2. Verfahren nach Anspruch 1, wobei das Trainieren des Modells anhand der Bilder des Objekttyps in unbeschädigter Form, um den Objekttyp und die Regionen des Objekttyps unter Verwendung von gegnerischen Netzwerken zu lernen, umfasst:
Trainieren eines Schadens-zu-Normal-Generators in den gegnerischen Netzwerken, um gefälschte Bilder zu erzeugen, die gefälschte unbeschädigte Bereiche aus anderen Bildern des Objekttyps in beschädigter Form umfassen; und
Lernen eines Schadensmerkmalsvektors für einen oder mehrere Bereiche von Interesse des Objekttyps aus den anderen Bildern des Objekttyps in beschädigter Form und den gefälschten Bildern, die die gefälschten unbeschädigten Bereiche umfassen,
das Trainieren des Modells anhand der Bilder des Objekttyps in unbeschädigter Form, um den Objekttyp und die Bereiche des Objekttyps unter Verwendung von gegnerischen Netzwerken zu lernen, umfasst ferner:
das Trainieren eines Normal-zu-Schaden-Rekonstruktors in den gegnerischen Netzwerken, um eine Abbildung von Normal-zu-Schaden-Merkmalen aus dem Schadensmerkmalsvektor zu lernen, wobei der Normal-zu-Schaden-Rekonstruktor so konfiguriert ist, dass er die gefälschten Bilder, die die gefälschten unbeschädigten Bereiche umfassen, in die anderen Bilder des Objekttyps in beschädigter Form umwandelt; und
Rückübertragung des gegnerischen Verlusts des Normal-zu-Schaden-Rekonstruktors auf den Schaden-zu-Normal-Generator.

3. Ein nicht-transitorisches, computerlesbares Medium, das Anweisungen zum Ausführen eines Prozesses speichert, wobei die Anweisungen Folgendes umfassen:
Trainieren eines Modells anhand von Bildern eines Objekttyps in unbeschädigter Form, um den Objekttyp und Bereiche des Objekttyps durch Verwendung von gegnerischen Netzwerken zu lernen, wobei das Modell so konfiguriert ist, dass es ein Bild erzeugt, das einen beschädigten Bereich innerhalb des Objekttyps umfasst; und
Ausführen des Modells auf das ungesehene Bild des Objekts, um ein weiteres Bild zu erzeugen, das den beschädigten Bereich innerhalb des Objekts umfasst, wenn ein ungesehenes Bild empfangen wird, das ein Objekt umfasst, das dem Objekttyp entspricht,
**dadurch gekennzeichnet, dass**
das Trainieren des Modells anhand der Bilder des Objekttyps in unbeschädigter Form, um den Objekttyp und die Bereiche des Objekttyps unter Verwendung der gegnerischen Netzwerke zu lernen, eines der folgenden umfasst:
Trainieren eines Objektgenerators und eines Objektdiskriminators in den gegnerischen Netzwerken anhand der Bilder des Objekttyps in unbeschädigter Form, um den Objekttyp zu lernen;
Lernen eines Schadensmerkmalsvektors für einen oder mehrere Bereiche von Interesse des Objekttyps aus den Bildern des Objekttyps in unbeschädigter Form und anderen Bildern des Objekttyps in beschädigter Form; und
Trainieren eines Schadensgenerators in den gegnerischen Netzwerken anhand des Schadensmerkmalsvektors, um die Bilder des Objekttyps in unbeschädigter Form in transformierte Bilder des Objekttyps mit Schäden in dem einen oder den mehreren interessierenden Bereichen umzuwandeln,
oder
Training eines Generators in den gegnerischen Netzwerken, um gefälschte Bilder zu erzeugen, die gefälschte beschädigte Bereiche aus den Bildern des Objekttyps in unbeschädigter Form enthalten;
Training eines Objektdiskriminators, um beschädigte von unbeschädigten Bildern des Objekttyps anhand der Bilder des Objekttyps in unbeschädigter Form und anderer Bilder des Objekttyps in beschädigter Form mit beschädigten Bereichen zu unterscheiden;
Trainieren eines bereichsbasierten Diskriminators, um die beschädigten Bereiche im Objekttyp von den anderen Bildern des Objekttyps in beschädigter Form mit den beschädigten Bereichen zu unterscheiden;
Durchführung einer gegnerischen Verlustfunktion für die gefälschten Bilder, die gefälschte beschädigte Bereiche enthalten, durch den Objektdiskriminator und den bereichsbasierten Diskriminator; und
Rückübertragung des gegnerischen Verlusts an den Generator,
oder
Trainieren eines Schadens-zu-Normal-Generators in den gegnerischen Netzwerken, um gefälschte Bilder zu erzeugen, die gefälschte unbeschädigte Bereiche aus anderen Bildern des Objekttyps in beschädigter Form umfassen; und
Lernen eines Schadensmerkmalsvektors für einen oder mehrere Bereiche von Interesse des Objekttyps aus den anderen Bildern des Objekttyps in beschädigter Form und den gefälschten Bildern, die die gefälschten unbeschädigten Bereiche umfassen.

4. Das nicht-transitorische computerlesbare Medium nach Anspruch 3, wobei das Trainieren des Modells anhand der Bilder des Objekttyps in unbeschädigter Form, um den Objekttyp und die Bereiche des Objekttyps unter Verwendung von gegnerischen Netzwerken zu lernen, umfasst:
Trainieren eines Schadens-zu-Normal-Generators in den gegnerischen Netzwerken, um gefälschte Bilder zu erzeugen, die gefälschte unbeschädigte Bereiche aus anderen Bildern des Objekttyps in beschädigter Form umfassen; und
Lernen eines Schadensmerkmalsvektors für einen oder mehrere Bereiche von Interesse des Objekttyps aus den anderen Bildern des Objekttyps in beschädigter Form und den gefälschten Bildern, die die gefälschten unbeschädigten Bereiche umfassen,
das Trainieren des Modells anhand der Bilder des Objekttyps in unbeschädigter Form, um den Objekttyp und die Bereiche des Objekttyps unter Verwendung von gegnerischen Netzwerken zu lernen, umfasst ferner:
das Trainieren eines Normal-zu-Schaden-Rekonstruktors in den gegnerischen Netzwerken, um eine Abbildung von Normal-zu-Schaden-Merkmalen aus dem Schadensmerkmalsvektor zu lernen, wobei der Normal-zu-Schaden-Rekonstruktor so konfiguriert ist, dass er die gefälschten Bilder, die die gefälschten unbeschädigten Bereiche umfassen, in die anderen Bilder des Objekttyps in beschädigter Form umwandelt; und
Rückübertragung des gegnerischen Verlusts des Normal-zu-Schaden-Rekonstruktors auf den Schaden-zu-Normal-Generator.

5. Vorrichtung, umfassend:
einen Prozessor, der so konfiguriert ist, dass er:
ein Modell anhand von Bildern eines Objekttyps in unbeschädigter Form zu trainieren, um den Objekttyp und Bereiche des Objekttyps unter Verwendung von gegnerischen Netzwerken zu lernen, wobei das Modell so konfiguriert ist, dass es ein Bild erzeugt, das einen beschädigten Bereich innerhalb des Objekttyps umfasst; und
zum Empfang eines ungesehenen Bildes, das ein dem Objekttyp entsprechendes Objekt umfasst, das Modell auf das ungesehene Bild des Objekts anzuwenden, um ein weiteres Bild zu erzeugen, das den beschädigten Bereich innerhalb des Objekts umfasst,
**dadurch gekennzeichnet, dass**
der Prozessor so konfiguriert ist, dass er das Modell anhand der Bilder des Objekttyps in unbeschädigter Form trainiert, um den Objekttyp und die Bereiche des Objekttyps durch Verwendung der gegnerischen Netzwerke zu lernen, indem er eines der folgenden Verfahren anwendet:
Trainieren eines Objektgenerators und eines Objektdiskriminators in den gegnerischen Netzwerken anhand der Bilder des Objekttyps in unbeschädigter Form, um den Objekttyp zu lernen;
Erlernen eines Schadensmerkmalsvektors für einen oder mehrere Bereiche von Interesse des Objekttyps aus den Bildern des Objekttyps in unbeschädigter Form und anderen Bildern des Objekttyps in beschädigter Form; und
Trainieren eines Schadensgenerators in den gegnerischen Netzwerken anhand des Schadensmerkmalsvektors, um die Bilder des Objekttyps in unbeschädigter Form in transformierte Bilder des Objekttyps mit Schäden in dem einen oder den mehreren interessierenden Bereichen umzuwandeln,
oder
Trainieren eines Generators in den gegnerischen Netzwerken, um gefälschte Bilder zu erzeugen, die gefälschte beschädigte Bereiche aus den Bildern des Objekttyps in unbeschädigter Form umfassen;
Trainieren eines Objektdiskriminators, um beschädigte von unbeschädigten Bildern des Objekttyps anhand der Bilder des Objekttyps in unbeschädigter Form und anderer Bilder des Objekttyps in beschädigter Form mit Beschädigungsbereichen zu unterscheiden;
Trainieren eines bereichsbasierten Diskriminators, um die beschädigten Bereiche im Objekttyp von den anderen Bildern des Objekttyps in beschädigter Form mit den beschädigten Bereichen zu unterscheiden;
Durchführung einer gegnerischen Verlustfunktion für die gefälschten Bilder, die gefälschte beschädigte Bereiche enthalten, durch den Objektdiskriminator und den bereichsbasierten Diskriminator; und
Rückübertragung des gegnerischen Verlusts an den Generator,
oder
Trainieren eines Schadens-zu-Normal-Generators in den gegnerischen Netzwerken, um gefälschte Bilder zu erzeugen, die gefälschte unbeschädigte Bereiche aus anderen Bildern des Objekttyps in beschädigter Form umfassen;
Lernen eines Schadensmerkmalsvektors für einen oder mehrere Bereiche von Interesse des Objekttyps aus den anderen Bildern des Objekttyps in beschädigter Form und den gefälschten Bildern, die die gefälschten unbeschädigten Bereiche umfassen.

6. Vorrichtung nach Anspruch 5, wobei der Prozessor so konfiguriert ist, dass er das Modell anhand der Bilder des Objekttyps in unbeschädigter Form trainiert, um den Objekttyp und die Bereiche des Objekttyps durch Verwendung von gegnerischen Netzwerken zu lernen, indem
Trainieren eines Schadens-zu-Normal-Generators in den gegnerischen Netzwerken, um gefälschte Bilder zu erzeugen, die gefälschte unbeschädigte Bereiche aus anderen Bildern des Objekttyps in beschädigter Form umfassen;
Lernen eines Schadensmerkmalsvektors für einen oder mehrere Bereiche von Interesse des Objekttyps aus den anderen Bildern des Objekttyps in beschädigter Form und den gefälschten Bildern, die die gefälschten unbeschädigten Bereiche umfassen,
der Prozessor ist ferner so konfiguriert, dass er das Modell anhand der Bilder des Objekttyps in unbeschädigter Form trainiert, um den Objekttyp und die Bereiche des Objekttyps mithilfe von gegnerischen Netzwerken zu lernen, indem:
Trainieren eines Normal-zu-Schaden-Rekonstruktors in den gegnerischen Netzwerken, um eine Zuordnung von Normal-zu-Schaden-Merkmalen aus dem Schadensmerkmalsvektor zu lernen, wobei der Normal-zu-Schaden-Rekonstruktor so konfiguriert ist, dass er die gefälschten Bilder, die die gefälschten unbeschädigten Bereiche enthalten, in die anderen Bilder des Objekttyps in beschädigter Form umwandelt; und
Rückübertragung des gegnerischen Verlusts des Normal-zu-Schaden-Rekonstruktors auf den Schaden-zu-Normal-Generator.

## Revendications

1. Procédé, comprenant les étapes consistant à :
entraîner un modèle via des images d'un type d'objet dans une forme non endommagée pour apprendre le type d'objet et des régions du type d'objet via une utilisation de réseaux antagonistes, le modèle étant configuré pour générer une image comprenant une région endommagée à l'intérieur du type d'objet ; et
pour recevoir une image non vue comprenant un objet correspondant au type d'objet, exécuter le modèle sur l'image non vue de l'objet pour générer une autre image comprenant la région endommagée à l'intérieur de l'objet,
**caractérisé en ce que**
l'étape consistant à entraîner le modèle via les images du type d'objet dans une forme non endommagée pour apprendre le type d'objet et des régions du type d'objet via une utilisation des réseaux antagonistes comprend l'une des opérations suivantes :
entraîner un générateur d'objet et un discriminateur d'objet dans les réseaux antagonistes à partir des images du type d'objet dans la forme non endommagée et ainsi apprendre le type d'objet ;
apprendre un vecteur de caractéristiques de dommage pour une ou plusieurs régions d'intérêt du type d'objet à partir des images du type d'objet dans une forme non endommagée et d'autres images du type d'objet dans une forme endommagée ; et
entraîner un générateur de dommage et un discriminateur de dommage dans les réseaux antagonistes à partir du vecteur de caractéristiques de dommage pour transformer les images du type d'objet dans une forme non endommagée en images transformées du type d'objet avec un dommage dans lesdites une ou plusieurs régions d'intérêt,
ou
entraîner un générateur dans les réseaux antagonistes pour générer des images factices comprenant des régions endommagées factices à partir des images du type d'objet dans une forme non endommagée ;
entraîner un discriminateur d'objet pour discerner des images endommagées versus non endommagées du type d'objet à partir des images du type d'objet dans une forme non endommagée et d'autres images du type d'objet dans une forme endommagée avec des régions de dommage ;
entraîner un discriminateur basé sur des régions pour discerner les régions endommagées dans le type d'objet à partir des autres images du type d'objet dans la forme endommagée avec les régions endommagées ;
effectuer une perte antagoniste pour les images factices comprenant des régions endommagées factices à partir du discriminateur d'objet et du discriminateur basé sur des régions ; et
rétro-propager la perte antagoniste vers le générateur,
ou
entraîner un générateur dommage-vers-normal dans les réseaux antagonistes pour générer des images factices comprenant des régions non endommagées factices à partir d'autres images du type d'objet dans une forme endommagée ; et
apprendre un vecteur de caractéristiques de dommage pour une ou plusieurs régions d'intérêt du type d'objet à partir des autres images du type d'objet dans une forme endommagée et des images factices comprenant les régions endommagées factices.

2. Procédé selon la revendication 1, dans lequel, quand l'étape consistant à entraîner le modèle via les images du type d'objet dans une forme non endommagée pour apprendre le type d'objet et les régions du type d'objet via une utilisation de réseaux antagonistes comprend les opérations consistant à :
entraîner un générateur dommage-vers-normal dans les réseaux antagonistes pour générer des images factices comprenant des régions non endommagées factices à partir d'autres images du type d'objet dans une forme endommagée ; et
apprendre un vecteur de caractéristiques de dommage pour une ou plusieurs régions d'intérêt du type d'objet à partir des autres images du type d'objet dans une forme endommagée et des images factices comprenant les régions non endommagées factices,
l'étape consistant à entraîner le modèle via les images du type d'objet dans une forme non endommagée pour apprendre le type d'objet et les régions du type d'objet via une utilisation de réseaux antagonistes comprend en outre les opérations consistant à :
entraîner un reconstructeur normal-vers-dommage dans les réseaux antagonistes pour apprendre un mappage de caractéristiques normal-vers-dommage à partir du vecteur de caractéristiques de dommage, le reconstructeur normal-vers-dommage étant configuré pour transformer les images factices comprenant les régions non endommagées factices en les autres images du type d'objet dans la forme endommagée ; et
rétro-propager une perte antagoniste du reconstructeur normal-vers-dommage vers le générateur dommage-vers-normal.

3. Support non transitoire lisible par ordinateur, stockant des instructions pour exécuter un processus, les instructions comprenant :
entraîner un modèle via des images d'un type d'objet dans une forme non endommagée pour apprendre le type d'objet et des régions du type d'objet via une utilisation de réseaux antagonistes, le modèle étant configuré pour générer une image comprenant une région endommagée à l'intérieur du type d'objet ; et
pour recevoir une image non vue comprenant un objet correspondant au type d'objet, exécuter le modèle sur l'image non vue de l'objet pour générer une autre image comprenant la région endommagée à l'intérieur de l'objet,
**caractérisé en ce que**
l'entraînement du modèle via des images du type d'objet dans une forme non endommagée pour apprendre le type d'objet et des régions du type d'objet via une utilisation des réseaux antagonistes comprend l'une des opérations suivantes :
entraîner un générateur d'objet et un discriminateur d'objet dans les réseaux antagonistes à partir des images du type d'objet dans la forme non endommagée pour apprendre le type d'objet ;
apprendre un vecteur de caractéristiques de dommage pour une ou plusieurs régions d'intérêt du type d'objet à partir des images du type d'objet dans une forme non endommagée et d'autres images du type d'objet dans une forme endommagée ; et
entraîner un générateur de dommage dans les réseaux antagonistes à partir du vecteur de caractéristiques de dommage pour transformer les images du type d'objet dans une forme non endommagée en images transformées du type d'objet avec un dommage dans lesdites une ou plusieurs régions d'intérêt,
ou
entraîner un générateur dans les réseaux antagonistes pour générer des images factices comprenant des régions endommagées factices à partir des images du type d'objet de forme non endommagée ;
entraîner un discriminateur d'objet pour discerner des images endommagées versus non endommagées du type d'objet à partir des images du type d'objet dans une forme non endommagée et d'autres images du type d'objet dans une forme non endommagée avec des régions de dommage ;
entraîner un discriminateur basé sur des régions pour discerner les régions endommagées dans le type d'objet à partir des autres images du type d'objet dans une forme endommagée avec les régions endommagées ;
effectuer une perte antagoniste pour les images factices comprenant des régions endommagées factices à partir du discriminateur d'objet et du discriminateur basé sur des régions ; et
rétro-propager la perte antagoniste vers le générateur,
ou
entraîner un générateur dommage-vers-normal dans les réseaux antagonistes pour générer des images factices comprenant des régions non endommagées factices à partir d'autres images du type d'objet dans une forme endommagée ; et
apprendre un vecteur de caractéristiques de dommage pour une ou plusieurs régions d'intérêt du type d'objet à partir des autres images du type d'objet dans une forme endommagée et des images factices comprenant les régions endommagées factices.

4. Support non transitoire lisible par ordinateur selon la revendication 3, dans lequel, quand l'entraînement du modèle via les images du type d'objet dans une forme non endommagée pour apprendre le type d'objet et les régions du type d'objet via une utilisation de réseaux antagonistes comprend les opérations consistant à :
entraîner un générateur dommage-vers-normal dans les réseaux antagonistes pour générer des images factices comprenant des régions non endommagées factices à partir d'autres images du type d'objet dans une forme endommagée ; et
apprendre un vecteur de caractéristiques de dommage pour une ou plusieurs régions d'intérêt du type d'objet à partir des autres images du type d'objet dans une forme endommagée et des images factices comprenant les régions non endommagées factices,
l'entraînement du modèle via les images du type d'objet dans une forme non endommagée pour apprendre le type d'objet et les régions du type d'objet via une utilisation de réseaux antagonistes comprend en outre les opérations consistant à :
entraîner un reconstructeur normal-vers-dommage dans les réseaux antagonistes pour apprendre un mappage de caractéristiques normal-vers-dommage à partir du vecteur de caractéristiques de dommage, le reconstructeur normal-vers-dommage étant configuré pour transformer les images factices comprenant les régions non endommagées factices en les autres images du type d'objet dans une forme endommagée ; et
rétro-propager une perte antagoniste du reconstructeur normal-vers-dommage vers le générateur dommage-vers-normal.

5. Appareil, comprenant :
un processeur configuré pour :
entraîner un modèle via des images d'un type d'objet dans une forme non endommagée pour apprendre le type d'objet et des régions du type d'objet via une utilisation de réseaux antagonistes, le modèle étant configuré pour générer une image comprenant une région endommagée à l'intérieur du type d'objet ; et
pour recevoir une image non vue comprenant un objet correspondant au type d'objet, exécuter le modèle sur l'image non vue de l'objet pour générer une autre image comprenant la région endommagée à l'intérieur de l'objet,
**caractérisé en ce que**
le processeur est configuré pour entraîner le modèle via les images du type d'objet dans une forme non endommagée pour apprendre le type d'objet et des régions du type d'objet via une utilisation des réseaux antagonistes via l'une des opérations suivantes :
entraîner un générateur d'objet et un discriminateur d'objet dans les réseaux antagonistes à partir des images du type d'objet dans une forme non endommagée pour apprendre le type d'objet ;
apprendre un vecteur de caractéristiques de dommage pour une ou plusieurs régions d'intérêt du type d'objet à partir des images du type d'objet dans une forme non endommagée et d'autres images du type d'objet dans une forme endommagée ; et
entraîner un générateur de dommage dans les réseaux antagonistes à partir du vecteur de caractéristiques de dommage pour transformer les images du type d'objet dans une forme non endommagée en images transformées du type d'objet avec un dommage dans lesdites une ou plusieurs régions d'intérêt,
ou
entraîner un générateur dans les réseaux antagonistes pour générer des images factices comprenant des régions endommagées factices à partir des images du type d'objet dans une forme non endommagée ;
entraîner un discriminateur d'objet pour discerner des images endommagées versus non endommagées du type d'objet à partir des images du type d'objet dans une forme non endommagée et d'autres images du type d'objet dans une forme endommagée avec des régions de dommage ;
entraîner un discriminateur basé sur des régions pour discerner les régions endommagées dans le type d'objet à partir des autres images du type d'objet dans la forme endommagée avec les régions endommagées ;
effectuer une perte antagoniste pour les images factices comprenant des régions endommagées factices à partir du discriminateur d'objet et du discriminateur basé sur des régions ; et
rétro-propager la perte antagoniste vers le générateur,
ou
entraîner un générateur dommage-vers-normal dans les réseaux antagonistes pour générer des images factices comprenant des régions non endommagées factices à partir d'autres images du type d'objet dans une forme endommagée ; et
apprendre un vecteur de caractéristiques de dommage pour une ou plusieurs régions d'intérêt du type d'objet à partir des autres images du type d'objet dans une forme endommagée et des images factices comprenant les régions endommagées factices.

6. Appareil selon la revendication 5, dans lequel, quand le processeur est configuré pour entraîner le modèle via les images du type d'objet dans une forme non endommagée pour apprendre le type d'objet et les régions du type d'objet via une utilisation de réseaux antagonistes via les opérations consistant à :
entraîner un générateur dommage-vers-normal dans les réseaux antagonistes pour générer des images factices comprenant des régions non endommagées factices à partir d'autres images du type d'objet dans une forme endommagée ;
apprendre un vecteur de caractéristiques de dommage pour une ou plusieurs régions d'intérêt du type d'objet à partir des autres images du type d'objet dans une forme endommagée et des images factices comprenant les régions non endommagées factices,
le processeur est en outre configuré pour entraîner le modèle via les images du type d'objet dans une forme non endommagée pour apprendre le type d'objet et les régions du type d'objet via une utilisation de réseaux antagonistes via les opérations consistant à :
entraîner un reconstructeur normal-vers-dommage dans les réseaux antagonistes pour apprendre un mappage de caractéristiques normal-vers-dommage à partir du vecteur de caractéristiques de dommage, le reconstructeur normal-vers-dommage étant configuré pour transformer les images factices comprenant les régions non endommagées factices en les autres images du type d'objet dans la forme endommagée ; et
rétro-propager une perte antagoniste du reconstructeur normal-vers-dommage vers le générateur dommage-vers-normal.
